# EUROPEAN PATENT APPLICATION

(11) **EP 2 944 999 A1**
(43) Date of publication of application: **18.11.2015**
(21) Application number: 14168467.0
(22) Date of filing: 15.05.2014
(51) Int. Cl.: G02B 27/01, A42B 1/24, H04N 5/74, G06F 3/01

(54) **Display cap**

(71) Applicant: Intral Strategy Execution S. L., 28109 Madrid (ES)
(72) Inventor: Wehrhahn, Ricardo, 28109 Madrid (ES)
(74) Representative: Valvoda, Jakob

(57) **Abstract**

An apparatus wearable on a head of a user is disclosed, including a mounting element adapted to at least partially encompass a circumference of the user's head, a peak held by the mounting element, the peak carrying at least one light source, and at least one sensor fixed to the peak, wherein the at least one light source is controlled by a processing unit responsive to data detected by the at least one sensor. Furthermore, a method for controlling a wearable apparatus is defined.

## Description

### TECHNICAL FIELD

The present invention refers to a wearable apparatus which can be embodied as a headgear or cap comprising at least one display. The apparatus according to the present invention may be configured to visually provide information to a user wearing the apparatus and to react on gestures provided by the user.

### BACKGROUND

From the prior art, head mounted display devices and head-up devices are known which enhance a real view of a person with additional information.

Document US 2010/0254017 Al discloses an apparatus for a see-through head mounted image display, the apparatus including an image source configured to generate an image that is transmitted along a main optical path and focused, by a beam splitter, into an entrance pupil of a user. The apparatus is configured to be held by a head mounted support. The image source is controlled by means of peripheral equipment which can be fixed to the head mounted support or which can be a handheld device. The image to be displayed at the image source may be selected by means of a voice recognition application, a wireless pointer mouse or a handheld device. The apparatus, however, is conspicuous when worn by a user, and it is uncomfortable to switch between utilisation and disuse thereof. Moreover, people wearing glasses cannot easily wear the apparatus.

From US 2013/0207887 A1, a head-up display device including eye tracking is known. Accordingly, an eye-tracking camera observes a user's eye, and a further camera captures an image of a scene. By using the eye tracking data, the device may provide information to the user about the part of the scene the user is focussed on. The information can be displayed on a head-up display such that the user can see the information overlaid to the scene. However, also this device is uncomfortable for users wearing vision correction spectacles or sunglasses, as the user needs a particular set of glasses providing the display functionality. Moreover, for instance en route, the device cannot be easily discarded, but to avoid breakage, the user needs a protection case to put the display spectacles in.

In view of the above, one object is to provide an apparatus with a better wearing comfort and an improved interactivity and handling.

### SUMMARY

The above problem and other shortcomings of the prior art are solved by an apparatus wearable on a head of a user and a method as defined in the independent claims. Preferred embodiments are disclosed in the dependent claims.

As used herein, a wearable apparatus includes a peak or visor, comparable to a peak or visor of a cap that may, for example, serve as a sun visor, which peak or visor may be held by a mounting element. The mounting element may be adapted to at least partially encompass a circumference of a user's head, thus to mount the peak on the user's head. The mounting element may be implemented, for example, as a headband or as a possibly interrupted ring configured to grip a head, or as a (e.g. dome-shaped) hollow structure such as a bonnet adapted to cover the upper surface of a head of an upright user from above.

The apparatus wearable on a head of a user according to the present invention includes a mounting element adapted to at least partially encompass a circumference of the user's head, and a peak held by the mounting element, wherein the peak carries at least one light source and at least one sensor fixed to the peak. The at least one light source is controlled by a processing unit responsive to data detected by the at least one sensor.

Accordingly, the apparatus of the present invention may be embodied as a cap, including the mounting element, the peak, the at least one light source, and the at least one sensor. As the at least one light source is fixed to the peak, the apparatus can easily be put on or be discarded by the user, no matter whether or not he or she wears spectacles such as sight correction glasses or sunglasses. When discarded, the head mounted display apparatus can be easily packed away, because contrary to spectacles, the cap is less susceptible to breakage. At the same time, the user enjoys the usual advantages of a cap, such as protection against sun or rain, for which functions he or she does not need an additional headpiece.

When the at least one light source is operated, the emitted light provides visual information displayed to the user. By means of the at least one sensor, the user can advantageously interact with the apparatus. For example, movements (or gestures) of the user within a detection range of the at least one sensor can influence the operation of the processing unit and the at least one light source. The at least one sensor may be configured to produce sensor data or detection data responsive to such movements or gestures. The detection data may be provided to the processing unit, which may be an internal processing unit or an external processing unit, such as a smartphone or another portable processing device, which can communicate with the sensors of the apparatus and provide control data to the light source. The processing unit may be embodied as a combination of one or more external processing resources and/or one or more internal processing resources, which may be directly arranged within the apparatus. The processing unit may process the sensor or detection data to control the at least one light source. As is to be understood, the control of the at least one light source, in particular the content of information rendered therewith, may be based on further data, such as on data captured by elements or further sensors of the apparatus and/or on externally received data, as detailed below.

Therefore, the wearable apparatus of the present invention enables a user to reliably control operation of the apparatus and the display of information in a comfortable manner, even without discarding the cap.

Preferably, the apparatus or cap including the mounting element and the peak is configured to be wearable such that the peak is held above the eyes of the user and extends substantially orthogonally to a viewing direction of the user. In the following, for ease of description of the positions of the respective features of the various embodiments, such wearing is referred to as "appropriate" or "normal" use. It is, however, to be understood that the cap may be worn differently, in particular with regard to the side where the peak is held. Preferably, the peak may be symmetrical with respect to a symmetry plane or at least may include a symmetrical portion attached to the mounting element.

When the apparatus or cap is worn appropriately, and when the user is in an upright position, a first surface of the peak (further referred to herein interchangeably also as a lower surface or shadow surface) faces the ground, whereas a second surface of the peak (further referred to herein interchangeably as an upper surface or a sun surface) faces the sky. The first and second surfaces may each be flat or curved and may be opposite to each other to substantially for parallel surfaces.

A width of the peak may be defined as an extension of the peak (preferably, a maximum extension) in a direction parallel to the face of a user or, more precisely, parallel to a notional line connecting the user's pupils. A length of the peak may be defined as an extension of the peak in a direction basically perpendicular to the user's face or parallel to a neutral viewing direction of the user; both definitions assume that the user is appropriately wearing the cap.

Preferably, the peak has a lower side and an opposite upper side, wherein the at least one sensor is fixed to the lower side and aligned substantially parallel to a longitudinal axis of the user's body.

The at least one sensor may be configured to transmit detected data to the processing unit, wherein the processing unit is configured to generate at least one control signal responsive to the detected data to control the at least one display.

According to a preferred embodiment, the length of the peak is at most 25cm, preferably between 1cm and 20cm, and most preferably between 2cm and 16cm. Additionally or alternatively, the width of the peak may be at most 20cm, preferably at most 15cm.

Preferably, the processing unit is arranged within or on the mounting element and/or the peak.

The mounting element may be of a flexible or elastic material. The peak and the mounting element may be attached to each other, which may include the case that the peak is a smooth continuation of the mounting element, i.e., that the mounting element and the peak are integrally formed of a single piece of material or commonly include such single piece.

The at least one light source is preferably configured to emit light at the lower surface or shadow surface side of the peak. The at least one light source may be partially or entirely countersunk in one or more dedicated recesses formed in the peak.

In a preferred embodiment, the at least one light source is a display or at least one display.

Preferably, such display may comprise an array of at least one light emitting diode, which may have a pixel density of at least 100ppi, preferably at least 250ppi or at least 300ppi, and most preferably of at least 360ppi. The display may be operated with a refresh rate of at least 50Hz, preferably at least 60 Hz and most preferably at least 120 Hz. Thereby, even complex and detailed information, e.g. realistic images and HD video data with fast motion, may be smoothly rendered to the user with a high degree of realism and without disturbing artefacts.

Particularly preferred is an embodiment wherein the at least one light source is an organic light emitting diode (OLED) display. Such OLEDs may be very thin, light and flexible, and they are energy saving. Moreover, they can provide a high contrast display. Thus, by means of an OLED display, the displaying facility may be integrated into the apparatus or cap without making the cap heavy or clumsy or otherwise conspicuous. Due to the high contrast provided by OLED display technology, information provided on the display may be very well identifiable even in a bright environment.

Alternatively or additionally, the wearable apparatus according to the present invention may include a laser scanning device. Accordingly, the at least one light source may be a laser light source (e.g., a laser diode) included in the laser scanning device which may be configured to generate an image by means of a modulated and speedily deflected laser beam emitted by the at least one laser light source. The image may be projected onto a display surface or onto the retina of a user.

The wearable apparatus may comprise a computing electronics and/or may be coupled to a computing electronics providing the processing unit. In both cases, the computing electronics may be coupled wirelessly or by means of a wire to the at least one light source and/or to the at least one sensor, and/or the computing electronics may be included in a separate, remote housing. In particular, it may be included in a handheld device such as a smartphone, mobile phone, a tablet device, palmtop device and the like. According to an embodiment, the computing electronics or the processing unit is wirelessly or directly coupled to the apparatus. Particularly preferred is an embodiment wherein the computing electronics or the processing unit is attached to the peak and/or to the mounting element, such that, when the cap is worn by a user, the user's head carries the computing electronics or processing unit. Particularly preferred is an embodiment where the computing electronics or the processing unit is at least partially accommodated in the interior of the cap, for example in a cavity formed in the peak.

In one embodiment, the processing unit is configured to operate the at least one light source in accordance with one or more operation modes indicative of information to be rendered on the at least one light source and information to be captured by the apparatus. Preferably, the apparatus may be operable in accordance with one or more operation mode(s) relating to information that is to be rendered and/or to information that is to be captured by the apparatus. In particular, the operation mode(s) may determine which information is to be rendered to a user, and/or how information is to be rendered and/or which data sources are to be used. Such operation mode may or may not influence the operation of the at least one light source. The set of one or more operation modes available for the apparatus may depend on the particular features possibly included, such as on information capturing devices or further sensors serving as data sources, e.g. one or more digital camera(s) and/or measurement device(s), and/or on output devices such as at least one earphone or loudspeaker, as detailed below.

The apparatus may be configured to receive a selection and/or activation of a respective operation mode by means of the at least one sensor providing detection data (e.g., responsive to detecting a gesture or movement). Accordingly, the apparatus may take one or more operation modes, i.e., it may operate according to it, based on the detection data.

According to a particular preferred embodiment, the at least one light source is operable to render a menu showing available operation modes, wherein the menu may further indicate to the user a way to select and/or activate one or more desired operation mode(s) by one or more movements in a predetermined detection range of the at least one motion sensor, the movements effectuating that the at least one sensor provides the detection data.

The at least one sensor may be a passive sensor not emitting energy but detecting heat changes, or it may be an active sensor sending out pulses and measuring their reflection. The sensor may be any suitable sensor capable of detecting motion or gestures preferably of a hand or both hands of the user, such as an optical sensor, a distance sensor or the like. The sensor may provide the detection data to the processing unit, which may further process the data in order to detect the motion or gesture. Additionally or as an alternative, the sensor may also include processing resources, which may evaluate and/or pre-process the data in order to detect the motion or gesture or simplify a detection of the motion or gesture by the processing unit. Hence, the at least one sensor may be configured to discern, e.g. when operating in a particular operation mode, different types of movements or gestures, and to accordingly generate detection data based on a respectively detected type. Alternatively or additionally, the apparatus may be configured to be controlled step by step by iterated movements of a user.

In one embodiment, the at least one sensor may be configured to transmit the detection data to the computing electronics and/or the processing unit when a moving object is detected in a predetermined detection range of the sensor(s). The at least one light source may be configured to receive one or more control signals generated by the processing unit or the computing electronics based on the detection data.

Further to the at least one sensor, the apparatus according to an embodiment may comprise input means, such one or more manual control unit(s), e.g. buttons, for receiving user input directed at user settings or the like, and may be configured to operate based on the received user input.

The apparatus according to another embodiment may include at least one battery for powering the at least one light source and/or the processing unit and/or the at least one sensor. The battery may be mounted on the cap. For this purpose, the mounting element and/or the peak may comprise at least one fixture for attaching the battery. Such fixture may be, for instance, arranged as a compartment for accommodating the battery therein.

In a preferred embodiment, such fixture for mounting a battery is located at the peak and/or at the mounting element, wherein preferably the distance to the peak is, along the mounting element, at most 15cm, more preferably at most 10cm, even more preferably at most about 6cm. Accordingly, when a user appropriately wears the cap, the battery fixed at the fixture is positioned laterally to his or her head or at a front part thereof, and it thus does not disturb when the user rests the back of the head at a backrest or when he or she is in a supine position. As used herein, the distance of two objects is defined as the minimum distance of any pair of points, one of which is on the first object and the other one of which is on the second object.

The wearable apparatus provided as a cap may thus be a self-contained, independently operable device. To be able to enjoy the functions of receiving visual information by means of the at least one light source, a user may simply put the cap on his or her head, which is most comfortable and effortless, even in cases where the user wears glasses. Likewise, in order to finish usage of the wearable apparatus, the cap can be easily removed and stored.

Preferably, the apparatus has a total weight of at most 250g, more preferably of at most 200g or at most 150g, most preferably of at most 100g. Such lightweight cap can be comfortably worn and carried by a user.

Alternatively or additionally to including a battery, the apparatus according to one embodiment may comprise one or more solar cells attached to the peak and/or to the mounting element, wherein the one or more solar cells are configured to provide electric energy to the at least one light source, the processing unit, and/or to a rechargeable battery. Preferably, the one or more solar cells may be fixed to the apparatus on the upper or sun surface of the peak. Additionally or alternatively, in cases where the mounting element comprises an at least partially domed or cone-shaped hollow structure, such as a bonnet, configured to at least partially cover a user's head, one or more solar cells may be fixed to this hollow structure. In any case, the solar cells may be configured to provide electric energy to the light source and/or to the sensors and/or to the computing electronics, or to (re-)charge a battery, wherein the solar cell(s) may be operable to charge, in accordance with a selection of a user, a battery of the apparatus and/or a battery of a separate device, such as of a mobile phone or smartphone of the user. Thereby, the apparatus is environmentally friendly, a user does not run the risk of running out of power, and if the solar cells are configured to charge a separate device, the user can take further advantage of the cap surface being exposed to the sun or another light source.

The apparatus according to one embodiment may include at least one ear phone, loudspeaker and/or bell signal system operable to render audio information to the user and preferably fixed to the apparatus, e.g., to the mounting element thereof. The ear phone, loudspeaker and/or bell signal system may be controllable based on detection data provided by the at least one sensor. According to an operation mode of the apparatus, the audio information may be independent of the operation of the at least one light source. According to another operation mode of the apparatus (which may be additionally or alternatively available), the audio information may relate to visual information displayed by means of the at least one light source. Thereby, in particular, the apparatus may be operable to serve as a video playback device rendering video images by means of the at least one light source and related acoustic data by the at least one earphone or loudspeaker. Additionally or as an alternative, the apparatus may comprise further output or rendering means for data of any other modality, which may be controlled by the processing unit, such as further visual, acoustic, haptic, force-feedback, olfactory or gustatory data. For example, the mounting element may include a force-feedback output means providing impulses to the head of the user. As another example, the apparatus may include an olfactory output means stimulating the olfactory system of the user.

According to another embodiment of the present invention, the apparatus includes one or more further sensors, wherein the processing unit is configured to control the light source responsive to data provided by the one or more further sensors. Preferably, the further sensors may include physiological sensors, body sensors and other measurement device(s) such as one or more of a clock, a heart rate monitor, a blood pressure meter, sensors measuring electrical activities along the head of the user, such as for electroencephalography, a thermometer for detecting a body temperature, a thermometer for detecting an ambient temperature, a barometer and/or a photometer for measuring the luminance of the environment. One or more, possibly all of such measurement devices may be located on the mounting element and/or the peak. In particular, one or more of the measurement device(s) may be located along a belt comprised by the mounting element and adapted to at least partially surround the user's head. Additionally or alternatively, when the mounting element comprises a (for instance domed, e.g., hemispherical) hollow structure (such as a bonnet) or a strap or mesh structure configured to encompass at least a portion of the user's scalp, at least one measurement device may be located basically at a top position of the hollow structure, e.g., at a position which is basically the upmost point of a user's head when the cap is appropriately worn by the upright user, and/or various measurement devices may be spread over the user's head. In embodiments including means for recording electrical activity of the brain (thus, for performing electroencephalography), the apparatus may include various electrodes distributed over the user's scalp, such as at some or all of the positions specified by the 10-20 system or any other recognized approach for describing locations of electrodes in the context of electroencephalography.

The apparatus may be operable to render information based on at least one output value of the one or more further sensors or measurement device(s). In particular, the at least one light source and/or a possibly included earphone, loudspeaker and/or bell signal system, and/or an output device for any other modality may be controllable based on measurement data provided by the respectively included further sensor or measurement device(s).

As mentioned above, the apparatus according to at least one embodiment of the present invention may be operable in accordance with each of a set of one or more operation mode(s). In embodiments including the one or more further sensors or measurement device(s), the set may include one or more operation mode(s) which effectuate that data measured by one or more of the measurement devices and/or calculated from such measured data is at least partially provided, as visual information, by means of the at least one light source, and/or is provided as audio data, by means of an earphone and/or loudspeaker, and/or by means of an output device for another modality (if included). For example, according to a particular operation mode, the measured body-related data may be rendered visually to the user, allowing him or her to take care of possibly critical values. According to another mode, said information may be rendered acoustically. Further operation modes may provide that an alarm is given (visually by the at least one light source, acoustically by earphone, loudspeaker and/or bell signal system, and/or according to another modality using the respective output device, if included) in case a predetermined critical limit of a measured value is reached. According to yet further operation modes, respective environmental data may be represented (visually, acoustically, and/or according to another modality), and/or data related to a weather forecast may be rendered (visually, acoustically, and/or according to another modality), which data may be computed based on data measured by at least one of the one or more measurement device(s).

Accordingly, the user can effortlessly receive the relevant information simply by putting the cap on his or her head, wherein the information may be particularly relevant for example when the user is on the road, such as biking, hiking or running.

As mentioned above, the apparatus according to at least one embodiment may be operable to receive a selection and/or activation of a respective operation mode included in a set of available operation modes, e.g. by means of the at least one sensor detecting one or more movements or gestures of the user. For example, the user may use one or both hands, which the user can naturally move in front of his or her body in order to perform hand gestures or swiping gestures or similar one-handed or two-handed or bimanual gestures.

The at least one sensor may have a shape of substantially a circle or a regular polygon. Alternatively, it may have a longitudinal shape, preferably extending, along the lower surface of the peak, in a width direction of the peak.

The at least one sensor may be configured to generate the detection data responsive to movements of the user within a detection range. Preferably, the at least one sensor is located at the lower surface of the peak and is directed so as to detect movements in a detection range in front of the upper part of the body of the user. Accordingly, the at least one sensor allows for a natural motion of the hands of the user. The dimension of the detection range (e.g., its aperture and/ore depth) of the at least one sensor may be pre-defined or may be adjustable, so as to allow for an adaptation of the body dimensions of the user.

Preferably, the detection range covers an angular zone extending from the at least one motion sensor. When the cap is appropriately worn by an upright user, the aperture of the angular zone, compared to a vertical direction, may be (predetermined or selectable so as to be) smaller than about 20°, or smaller than about 10°, or even smaller than about 5°.
An appropriate angle may be selected under consideration of the respective individual requirements and preferences; a large angle may ease that a user can reach the region, whereas a smaller angle inhibits that external motions undesirably produce a detection signal.

Additionally or alternatively, the predetermined detection range of the at least one sensor may extend to a depth distance between 10cm and 70cm (more preferably between 20cm and 60cm) from the peak, in a vertical direction when the cap is appropriately worn by an upright user. As a consequence, the user may comfortably reach the region with his or her hand or arm or with any object, so that the user can easily effectuate that a movement or gesture be detected to control the apparatus, while at the same time, movements of the legs, such as when the user is walking, can be disregarded because the legs are outside the predetermined region.

Accordingly, generation of disturbance data is avoided or at least minimised, and the apparatus can be reliably controlled by hand movements within the detection range.

According to one embodiment, the at least one light source may be oriented so as to emit a light beam which is tilted, with respect to a vertical line when the cap is appropriately worn, towards a side where the peak is attached to the mounting element.

According to another embodiment, the at least one light source is configured such that, when the cap is appropriately worn by a user, the emitted light beam is directed towards one or both eyes of the user.

In an alternative embodiment, the apparatus further includes an optical surface optically coupled to the at least one light source, wherein at least one edge of the optical surface is fixed to the peak. Hence, the peak of the apparatus may include an at least partially reflective optical surface, such as a beam splitter, at least one edge or corner of which may be fixed to the peak.

According to a preferred embodiment, the optical surface includes at least one region where the optical surface can exhibit various, selectable optical characteristics. Therein, the optical surface is preferably electronically controllable (e.g., by means of the processing unit) so as to realise selected optical characteristics within the at least one region.

For instance, the at least one region may be operable to selectively have one of a plurality of degrees of light transparency and/or reflectivity and/or absorption. Consequently, the optical surface may be operable to provide, at a first point in time, a first degree of light transparency (and/or reflectivity and/or absorption) in the at least one region, and to provide a second degree (which is different from the first degree) of light transparency (and/or reflectivity and/or absorption) at a second point in time. As a result, the at least one region may at the first point in time, for example, reflect most of light emitted by the at least one light source towards the eye of the user, while at the second point in time, it may let most of the light pass through.

For example, the at least one region may include at least one segment filled with liquid crystals, the light modulating properties of which can be electronically controlled.

According to a preferred embodiment, the optical surface includes a plurality of regions where it can exhibit various selectable optical characteristics, the plurality of regions being controllable independently of each other with regard to the optical characteristics exhibited therein.

The electronic control of the optical surface with respect to the optical characteristics within the at least one region may be operated based on information to be rendered by means of the at least one light source and/or on data detected by the at least one sensor.

For example, the optical surface may be operable to entirely or almost entirely have high reflectivity when information such as a game or video is rendered, by means of the at least one light source, to the user, whereas in other situations, for instance when written information (such as output values of measurement devices, if included in the apparatus) is rendered to the user, only a first portion of the optical surface has high reflectivity, whereas another, second portion (which may be larger than the first portion) has less reflectivity.

Accordingly, the optical surface can be flexibly adapted so as to cope with the various situations and objectives in and for which the wearable apparatus may be utilised.

The optical surface may be configured to permanently take a single position, which in this case is its operation position. Alternatively, the optical surface may be configured to selectively take an operation position or an idle position. According to a preferred embodiment, the optical surface is configured such that it maintains its operation position (in particular, a tilt angle with respect to the peak) unless dedicated force is applied. To this end, a latching mechanism for the optical surface may be fixed to the peak.

In another embodiment the optical surface is movably fixed to the peak so as to be selectably positioned in an operation position or in an idle position, wherein in the idle position, the optical surface is substantially parallel to the peak, and in the operation position, the at least one light source is configured to illuminate the optical surface.

In particular, the optical surface may be configured to be selectively pulled out of or slid into the interior of the peak. According to this embodiment, the peak is preferably arranged to include a cavity or intake where the optical surface can at least partially be accommodated in when it has been slid into the peak, i.e., in its idle position. Accordingly, the peak provides a protection case for the optical surface when the optical surface is not used. When pulled out of the peak, the optical surface can preferably be tilted with respect to the peak so as to take its operation position. An edge where the rendering surface is fixed to the peak may be a tilting axis.

Additionally or alternatively, the optical surface may be configured to be selectively folded apart or folded up to the peak. Also in this case, an edge where the optical surface is fixed to the peak may be a tilting axis. Preferably, the optical surface is arranged such that, when it is folded up to the peak (e.g., so as to take its idle position), the optical surface is basically in parallel with the lower or shadow surface of the peak. In particular, in this state, the optical surface may form a laminate structure with the peak, possibly with the at least one light source in between. Consequently, the peak may protect the folded up optical surface against external forces. The optical surface may take its operation position when folded apart the peak.

The optical surface may be of a flexible material, and it may at least partially adapt, in the idle position, to the shape of the peak. For example, when the peak has a curved shape, the optical surface may be likewise curved in its idle position and it may automatically flatten, due to its flexibility, when it is in its operation position. Such shape adaptation in the idle position may allow for a particularly good protection of the optical surface by the peak.

Preferably, the optical surface and the at least one light source are arranged such that, when the optical surface is in its operation position, a light beam emitted by the at least one light source meets the optical surface and is at least partially reflected by the optical surface. Preferably, when the cap is appropriately worn by a user and the optical surface is in its operation position, the light beam emitted by the at least one light source may be reflected, by a reflective portion of the optical surface, to one or both eye(s) of the user.

Accordingly, by means of the at least one light source projecting light onto the optical surface, information may be rendered to a user wearing the cap. When the user is not interested in receiving such information, he or she may slide in (respectively fold up) the optical surface to the peak. Thus, the information rendering functionality can be easily activated and deactivated by the user in accordance with his or her momentary interests. When the optical surface is slid in (respectively folded up) into the peak, the apparatus does not attract much attention in the public. Moreover, in this situation, the optical surface is protected by the peak, so that the apparatus can be comfortably packed away and stored in a bag or rucksack, for example.

Preferably, the optical surface is located, in its operation position, such that an edge and/or at least one corner of the optical surface borders on the peak at a distance of at least 3cm, more preferably at least 5cm, even more preferably at least 8cm from a (possibly notional) line where the peak borders on the mounting element. Accordingly, when the cap is appropriately worn, the distance between the user's eyes and the optical surface (in its operation position) likewise is about at least 3cm (or 5cm or 8cm, respectively). Such distance allows a user's eye to focus the rendered information in a relaxed mode. Moreover, in embodiments according to which the optical surface can be a pulled-out or folded apart, said position allows a comfortable pulling-out (respectively, folding-apart) even while the cap is worn, even for a user wearing spectacles.

According to a preferred embodiment, the peak with the optical surface in the operation position is shaped symmetrically with respect to a (notional) plane.

Preferably, the optical surface is arranged at the peak such that, when the cap is appropriately worn, a user can see at least a portion of the optical surface with each one of his or her eyes.

Alternatively, the optical surface may be positioned such that it is, in its operation position, in front of only one eye of a user appropriately wearing the cap. A second, analogous (e.g., pull-out and/or fold-apart) optical surface may additionally be positioned, in its operation position, in front of the other eye of the user.

The apparatus according to one embodiment may further comprise an optical arrangement, wherein the optical arrangement is preferably at least partially positioned within an optical path of the at least one light source. Preferably, the optical arrangement may include one or more optical element(s) such as at least one prism, at least one lens and/or at least one polarising filter. Some or all of the optical arrangement may be located so as to cover the at least one light source at its light emitting side. The optical element(s) may be configured such that, when the cap is appropriately worn, light emitted by the at least one light source passes at least a part of the optical arrangement before impinging on a user's eye(s). Such optical arrangement may comprise the optical surface according to at least one embodiment and may be configured to enable viewing of the at least one light source. Moreover, when a transparent optical surface or a beam splitter is included, the optical arrangement may be configured to allow for a simultaneous sharp view of both an image reflected by the optical surface and a distant real scene a user may see through the optical surface or which may be projected onto the optical surface.

It is to be understood that the optical arrangement may include the optical surface according to at least one embodiment and may be handled accordingly. In particular, the optical arrangement may be configured to selectively be folded apart from the peak, to take the operation position, or be folded up to the peak, to take the idle position; and/or the optical arrangement may be configured to selectively be at least partially slid into a cavity within the peak, to take the idle position, or be pulled out of the cavity, to take the operation position.

According to a preferred embodiment, the apparatus further comprises at least one camera, wherein the processing unit is configured to control the at least one light source to render information based on image data captured by the camera. Preferably, the at least one camera is a digital camera. For instance, at least one of the one or more cameras may be fixed to the peak, for example, at an edge thereof between the upper and lower surface and/or on the upper surface, preferably at or about a position most remote from the mounting element. Alternatively or additionally, at least one of the one or more cameras may be fixed to the mounting element. In cases where the mounting element comprises a hollow structure such as a domed or cone-shaped bonnet or a strap or mesh structure configured to at least partially cover the top of a user's head, at least one of the one or more cameras may be positioned on this structure. In particular, the at least one camera may be located at a top position of such structure, thus, at a position which is basically the upmost point of the cap when the cap is appropriately worn by an upright user.

According to a preferred embodiment, such camera located at the top position is configured to be oriented so as to focus in a direction substantially opposite to the peak, i.e, so as to capture scenes occurring behind or at a side of a user appropriately wearing the cap. Alternatively or additionally, the camera at the top position may be configured to be rotatable around itself, wherein preferably a rotation angle of at least 90°, more preferably of at least 180° or at least 270°, or a full rotation angle of 360° may be facilitated. The rotation may be operable manually or automatically; such automatic rotation may be controllable by means of the at least one sensor, for example based on at least one detection signal generated by the at least one sensor. Accordingly, a user can adjust a direction from where he or she wishes the digital camera to capture images, for example, by moving its hand towards the desired direction or applying a swiping motion.

The captured image data may comprise information the user's eyes are not receptive to. In particular, at least one of the one or more camera(s) may include a thermal imaging function and/or night vision capabilities.

The apparatus is preferably operable to render information based on image data captured by the one or more camera(s). In particular, the at least one light source and/or (when included) the at least one earphone, loudspeaker and/or bell signal system and/or (when included) the output device for another modality may be controllable based on image data captured by the one or more cameras. For instance, the apparatus may be operable to render, by means of the at least one light source, image data captured by at least one of the one or more cameras. The thus rendered image data may be a night vision, a thermal image and/or a rearwards view of the user. Thereby, the user's natural sight can be enhanced.

The embodiments including the one or more camera(s) allow for an evaluation of the image data captured by the camera(s). For instance, the computing electronics or the processing unit included in or coupled to the apparatus may be configured to include a functionality of comparing the image data with stored or fetched data.

As mentioned above, the apparatus according to embodiments of the present invention may be operable in accordance with a set of one or more operation mode(s) which may be selectable and/or can be activated by means of the at least one sensor or further sensors. Such set of operation modes may include a mode of visually rendering externally received information (such as current broadcasts) and/or a mode of rendering internally stored data. In embodiments including at least one earphone, a loudspeaker and/or a bell signal system, additionally or alternatively to the above, modes of acoustically rendering externally received information and/or acoustically rendering internally stored data may be included, and/or one or more mode(s) relating to a audio rendering volume. Similarly, internal and external data for any other modality may be combined and rendered appropriately.

In embodiments comprising the one or more cameras, the set of operation modes may, in particular, include some or all of: a mode of rendering images captured by at least a selected one of the one or more cameras, a mode of rendering information related to the captured image data, a mode of rendering a particular type of images (such as thermal images or night vision images captured by at least one of the one or more cameras), and/or a mode of rendering visual information dependent on an outcome of a comparison of image data captured by at least one of the one or more cameras with stored or fetched data.

In embodiments including both one or more cameras and at least one earphone, loudspeaker and/or bell signal system and/or output means for another modality, the set of operation modes may further include one or more mode(s) of acoustically providing an alert to the user when image data captured by at least one of the one or more cameras indicates a predetermined (possibly dangerous) situation (such as a person or an object behind the user or a speedily approaching object) or providing the alert using the other modality, such as using a force-feedback device integrated in the apparatus.

As mentioned above, the sensor may be configured to discern different types of movements and to accordingly generate detection data based on a respectively detected type. For example, the sensor may be capable to capture a particular direction a user is pointing at, e.g. to indicate an object about which the user wishes that additional information be rendered by the apparatus. The information the user is interested in can then be rendered, e.g. based on image data captured by the at least one camera. The processing unit may also continuously evaluate the data captured by the cameras in order to allow for motion tracking or object tracing of a particular object captured by the data and may render the desired information in a position adjacent to or overlaying the real image of the object of interest. According to a preferred embodiment, the apparatus maintains rendering information about the object until a further dedicated movement is detected by the motion sensor.

According to a further embodiment, the apparatus includes a domed or cone-shaped bonnet configured to at least partially cover the top of a user's head, wherein the bonnet is at least partially formed from at least one organic light emitting diode or a respective display. Such bonnet may be configured to take a colour based on a user's selection or may display any information provided by the processing unit.

According to another aspect, a method for operating an apparatus according to one of the embodiments is provided, comprising the steps of capturing data detected by the at least one sensor, processing the captured data by the processing unit, and controlling the at least one light source based on the processed captured data.

It is to be understood that embodiments of the method may include any operation steps discussed above with regard to embodiments of the apparatus. For example, the method according to an embodiment may include the steps of selectively folding the optical surface apart from the peak, to take the operation position, or selectively folding the optical surface up to the peak, to take the idle position. In yet another embodiment, the method further comprises selectively sliding the optical surface at least partially into a cavity within the peak, to take the idle position, or pulling out the optical surface of the cavity, to take the operation position.

### BRIEF DESCRIPTION OF THE DRAWINGS

Further features and advantages of the present invention as well as the structure and operation of the various embodiments and features are described with reference to the accompanying schematic drawings, wherein
- Fig. 1: depicts an apparatus according to a first embodiment of the present invention from below;
- Fig. 2: provides a schematic view (slanted from above) of an apparatus according to a second embodiment of the present invention;
- Fig. 3a: shows a user appropriately wearing an apparatus according to a third embodiment including a optical surface in an idle position;
- Fig. 3b: depicts the user appropriately wearing the apparatus according to the third embodiment, wherein the optical surface is in an operation position; and
- Fig. 4: illustrates a user appropriately wearing an apparatus according to a fourth embodiment.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

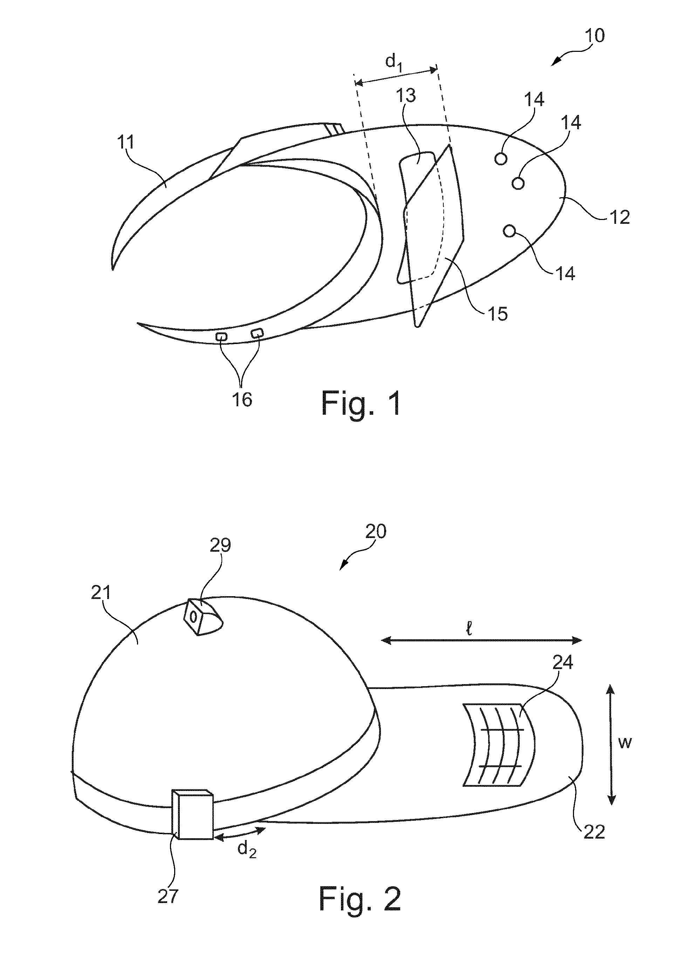

A first embodiment of an apparatus (cap) 10 of the present invention includes, as shown in Figure 1, a mounting element 11 and a peak 12. The mounting element is configured as an interrupted ring which may partially surround a user's head and clasp it from both sides. Attached to the mounting element is the peak 12. Shown in Figure 1 is the shadow or lower surface of the peak, i.e., a surface that, when a user appropriately wears the cap (i.e., the apparatus) and is upright, faces the ground. A light source 13 being a display field (which may be formed by one or more light emitting diodes) is fixed to the shadow surface of the peak. The field may include one or more organic light emitting diodes.

Furthermore, an optical surface 15 which may also be referred to as a rendering surface in the following description is fixed to the peak 12. In the depicted state, the rendering surface is in its operation position. Accordingly, when light source 13 emit(s) light, the respective beams will meet the rendering surface 15 and will be reflected therefrom, towards a user's eye. As mentioned above, the rendering surface 15 may be electronically controllable with respect to optical characteristics of one or more regions of the rendering surface. Accordingly, the light transparency in the one or more regions may, for example, be selectably increased or reduced.

An edge of the rendering surface 15 is fixed to the peak 12, at a distance d₁ to a line where the peak 12 borders on the mounting element 11. The distance d₁ is preferably at least 3cm, more preferably at least 5cm or at least 8cm.

Three sensors 14, which may also be referred to as motion detection sensors or as "motion sensors" in the following description, are further fixed to the peak 12 at the shadow surface thereof. The motion sensors are configured to detect movements within a predetermined range, and to produce detection data responsive thereto. The one or more light sources are configured to be controllable based on the detection data. Accordingly, they may, for instance, be activated based on the detection data, and/or a selection of which data is to be rendered by the one or more light source may be caused by means of the at least one motion sensors 14.

As is further depicted in Figure 1, further sensors or measuring devices 16 are fixed to the mounting element 11. The measuring devices may be configured to sense, for example, a user's pulse, blood pressure and/or temperature, the electric activity of the user's brain or an environmental temperature or the like. Based on one or more values measured by the measuring device(s), information may be rendered to a user wearing the cap. For example, when the apparatus is operated in accordance with a respective operation mode, the measured value(s) may be displayed by means of the one or more light emitting diodes. Alternatively or additionally, according to another operation mode, the measured value(s) may be compared to one or more predetermined threshold(s), and an alert, e.g. by a signalling lighting, may be caused in case a measured value exceeds the threshold(s) and/or in case the measured value falls below the threshold(s).

While in the example shown in Fig. 1, a light source 13 being a display is illustrated, which may use one or more light emitting diodes, it is to be understood that any other suitable display technology can be used, such as a projection technology, another display technology and the like.

Figure 2 depicts another embodiment of an apparatus 20 of the present invention. Therein, the mounting element 21 includes a domed hollow structure configured to cover the head of an upright user from above. As further shown in Figure 2, the apparatus 20 includes a peak 22, a sun surface side thereof is depicted. The peak 22 is symmetrical to a notional axis that extends radially from the mounting member 21.

When the cap 20 is appropriately worn by a user, the peak extends, by a length ℓ, basically perpendicularly from the forehead of the user. The length ℓ is preferably at least 6cm or 8cm, and/or at most 25cm or 20cm, more preferably at most 16cm.

The width w of the peak 22 is defined as the maximum extension of the peak in a direction parallel to a notional line connecting the pupils of a user appropriately wearing the cap. Thus, the width w is orthogonal to the length ℓ and - when the cap is appropriately worn by an upright user - parallel to the ground. For instance, the width may be in a range between 10cm and 20cm, or more preferably between 10cm and 15cm. However, other extensions of the peak are possible.

The exemplary embodiment depicted in Figure 2 further includes a field of solar cells 24 fixed on the sun surface of the peak 22. The solar cells may be operable to provide energy to some or all energy consuming elements of the apparatus, e.g. to the one or more light source(s) and/or to a computing electronics and/or to further included digital camera(s) or the like. Additionally or alternatively, the solar cells may be adapted to charge a battery powering some or all power consuming elements of the apparatus. Additionally or alternatively, the solar cells 24 may be adapted to charge a battery of an external device, such as a mobile phone that may be connectable to the solar cells 24.

Further shown in Figure 2 is a fixture 27 for a battery. The battery may be configured to provide energy to some or all energy consuming elements of the apparatus. It may be rechargeable by the solar cells 24. The fixture 27 depicted in Figure 2 is fixed to the mounting element 21 at a distance d₂ to the peak. Preferably, the distance d₂ is at most 15cm, more preferably at most 10cm, most preferably at most 6cm. Therein, a distance of 0cm is possible, which means that the fixture is attached to the peak. Due to such values of the distance d₂, it is avoided that the fixture and/or the battery attached thereto disturbs a user when he or she is lying in a supine position or leaning against a backrest.

A digital camera 29 is mounted on a top portion of the hemispherical hollow structure forming the mounting element 21. The digital camera is directed such that, when a user appropriately wears the cap 20, the digital camera can capture image data of a scene in the back side of the user. According to an operation mode that may be included in the set of one or more operation modes available for the apparatus, data related to thus captured image data may be rendered to the user by means of the one or more light sources. The digital camera may be automatically or manually turnable so as to be variably oriented, i.e., so as to be operable to capture image data in various directions from the user.

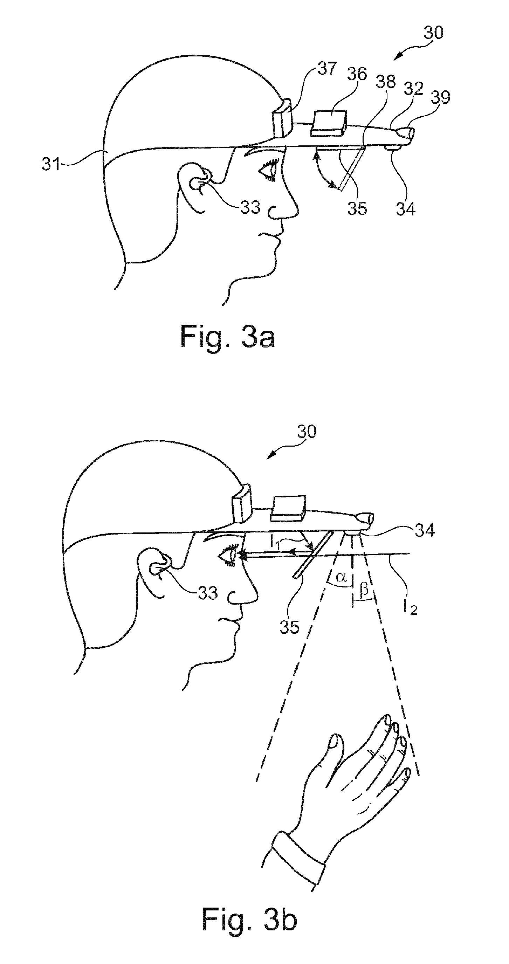

In Figures 3a and 3b, a user is shown who appropriately wears an apparatus 30 embodied as a cap according to an embodiment of the present invention. Accordingly, the peak 32 of the cap 30 is held above the eyes of the user and extends orthogonally to his face.

The mounting element 31 according to the depicted embodiment is a domed hollow structure serving as a bonnet, i.e., covering the upright user's head from above. Attached to the mounting element 31 is, at a distance of 0cm to the peak 32 (thus attached to the peak), a fixture 37 for a battery which may be attached for powering some or more of the energy consuming elements of the apparatus. Moreover, a computing electronics 36 such as a processing unit is fixed to the peak so as to be carried by the user's head. The computing electronics 36 may be configured to control the one or more light source(s) based on detection data provided by a motion sensor 34.

Further included in the embodiment shown in Figure 3a and 3b is an earphone 33. The earphone may be operable to render audio data. The audio data may relate to visual data rendered by means of the one or more light emitting diodes and/or may supplement such visual data. As described above, in accordance with an operation mode of the apparatus 30, detection data provided by the motion sensor 34 may serve to control the earphone 33, e.g. by means of the computing electronics 36 which may communicate wirelessly (e.g. using WiFi or Bluetooth technology) with the earphone. An alternative embodiment may include a wired connection of the earphone 33 with the apparatus, in particular with the computing electronics.

The embodiment shown in Figure 3a and 3b also includes a digital camera 39 located on the peak at a position most remote from the mounting element 31. As detailed above, the digital camera may capture image data which may enhance the user's sight, such as thermal images and/or night vision images, for example. The image data or information related thereto may be visually rendered, by means of the one or more light source(s), to the user. Additionally or alternatively, the image data may be automatically analysed, such as compared to one or more image(s) which may be internally stored or have been received from an external source and based on such comparison, visual or acoustical data may be rendered to the user.

The apparatus 30 shown in Figures 3a and 3b includes a partially reflective and partially transparent rendering surface 35, which may include a beam splitter, and/or at least a portion of which may be electronically controllable with respect to its optical characteristics as detailed above. In the situation depicted in Figure 3a, the rendering surface is in its idle position in which it is laminated under the shadow surface of the peak. Arranged between the peak and the rendering surface may be the one or more light source(s) (not shown).

As further illustrated in Figure 3a, the rendering surface can be folded apart from the peak, by rotation about a tilting axis 38.

Figure 3b depicts a situation where the rendering surface has been folded apart and takes its operation position. Accordingly, a light beam ℓ1 radiated by the one or more light source(s) (not shown) meets the rendering surface 35 and is reflected therefrom towards the eye of the user looking straight forward. At the same time, another light beam ℓ2 emanating from a remote light source passes the rendering surface and likewise enters the user's eye. Accordingly, the user can at the same time watch a remote natural scene and information displayed, by means of the one or more light source(s), on the rendering surface. An optical arrangement (not shown) may be further included between the one or more light source(s) and the rendering surface, wherein the optical arrangement may serve to improve the picture rendered on the rendering surface and/or to make it easier for the user to simultaneously capture the information displayed on the rendering surface and the remote information. In particular the optical arrangement may include the rendering surface 35 and one or more lenses to project an image of the environment onto the rendering surface 35, such that the user may sharply perceive both, the image provided by the at least one light emitting diodes and the image projected by the one or more lenses, i.e. with the same accommodation of the eyes. Furthermore, the optical arrangement may also include panels or covers on its sides to avoid disturbing reflections of light from the sides and to generate a sharp image of the environment on the rendering surface 35.

As is further illustrated in Figure 3b, the user can produce detection data by moving an object (such as his hand) within the detection range of the motion sensor 34. In the depicted cross section (extending orthogonally to the user's face in the vertical, i.e. showing the user's side-face), the detection range includes an angular zone extending from the motion sensor 34 and defined by two angles α and β measured, with regard to the vertical, in the direction in line with and contrary to the user's viewing direction, respectively. The angles may coincide, or they may be different. Preferably, each of the angles is at most 20°, at most 10° or at most 5°, and/or the detection range has an extension (i.e., a depth) of at most 70cm and/or at least 10cm, more preferably at most 60cm and/or at least 20cm from the peak in a direction that is substantially parallel to a longitudinal axis of the user's body (when the user appropriately wears the cap).

In the embodiment shown in Figures 3a and 3b, the motion sensor is positioned on the peak such that the rendering surface is located between the motion sensor 34 and the mounting element 31. Accordingly, the detection range covers a region that is easily reached by a user's hand, and it does not cover the user's face. Thus, no detection data is inadvertently produced by facial expressions of the user, e.g. when the user is speaking or laughing. However, according to other possible embodiments, at least one of the at least one motion sensor may be directed to the user's face (when the cap is appropriately worn). This may be, in particular, advantageous in cases where the directed motion sensor can discern different movements, so that the one or more light emitting diodes can be controlled based on dedicated movements of the user's mouth or eyes, for example.

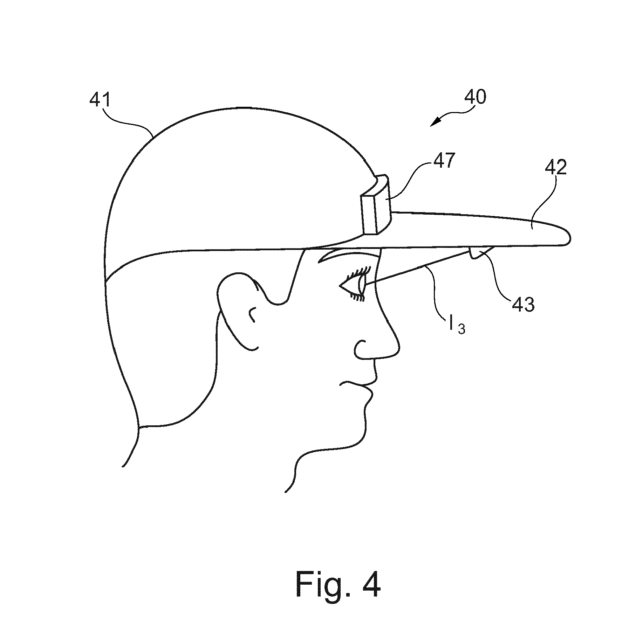

Similar to the embodiment in Figures 3a and 3b, also the cap embodying the apparatus 40 shown in Figure 4 is appropriately worn by a user. The cap includes a domed mounting member 41 (configured to cover the head of the upright user from above) and a peak 42. Moreover, a fixture 47 for a battery and/or a computing electronics is attached to the mounting element 41, at zero distance to the peak.

The apparatus 40 of the embodiment depicted in Figure 4 includes at least one light source43 fixed at the shadow surface of the peak 42. The at least one light source 43 is oriented so as to direct its light beam(s) ℓ3 directly to the user's pupil. Thus, the user can capture information provided by means of the one or more light emitting diode(s) by looking up. This embodiment is particularly inconspicuous. According to a further embodiment, an optical arrangement such as a lens, a prism and/or a polarising filter may be provided in the light path of the beam ℓ3, i.e., between the at least one light emitting diode and the user's pupil.

While some embodiments have been described in detail, it is to be understood that the aspect of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. An apparatus wearable on a head of a user, including:
a mounting element (11, 21, 31, 41) adapted to at least partially encompass a circumference of the user's head;
a peak (12, 22, 32, 42) held by the mounting element, the peak carrying at least one light source (13, 43) and at least one sensor (14, 34) fixed to the peak,
wherein the at least one light source (13, 43) is controlled by a processing unit (36) responsive to data detected by the at least one sensor.

2. The apparatus according to claim 1, wherein the peak has a lower side and an opposite upper side, wherein the at least one sensor (14, 34) is fixed to the lower side and aligned substantially parallel to a longitudinal axis of the user's body.

3. The apparatus according to claim 1 or 2, wherein the at least one sensor is configured to transmit detected data to the processing unit (36), wherein the processing unit (36) is configured to generate at least one control signal responsive to the detected data to control the at least one light source (13, 43).

4. The apparatus according to one of the preceding claims, wherein the processing unit (36) is arranged within or on the mounting element (11,21,31,41) and/or the peak (12, 22, 32, 42).

5. The apparatus according to one of the preceding claims, wherein the at least one light source (13, 43) is a laser light source included in a laser scanning device, or is a display, preferably an organic light emitting diode (OLED) display.

6. The apparatus according to one of the preceding claims, further including an optical surface (15, 35) optically coupled to the at least one light source (13, 43), wherein at least one edge of the optical surface is fixed to the peak (12, 22, 32, 42).

7. The apparatus according to claim 6, wherein the optical surface (15, 35) is movably fixed to the peak (12, 22, 32, 42) so as to be selectably positioned in an operation position or in an idle position, wherein in the idle position, the optical surface (15, 35) is substantially parallel to the peak (12, 22, 32, 42), and in the operation position, the at least one light source (13, 43) is configured to illuminate the optical surface (15, 35).

8. The apparatus according to one of the preceding claims, wherein the optical surface (15, 35) comprises a beam splitter.

9. The apparatus according to claim 7 or 8, wherein
the optical surface (35) is configured to selectively be folded apart from the peak (32) to take the operation position, or be folded up to the peak (32) to take the idle position; and/or
wherein the optical surface (35) is configured to selectively be at least partially slid into a cavity within the peak (32) to take the idle position, or be pulled out of the cavity to take the operation position.

10. The apparatus according to one of the preceding claims, wherein the processing unit (36) is configured to operate the at least one light source (13, 43) in accordance with one or more operation modes indicative of information to be rendered by means of the at least one light source (13, 43) and/or information to be captured by the apparatus.

11. The apparatus according to one of the preceding claims, further comprising an optical arrangement, wherein the optical arrangement is at least partially positioned within an optical path of the at least one light source (13, 43).

12. The apparatus according to one of the preceding claims, further comprising at least one camera (29, 39), wherein the processing unit (36) is configured to control the at least one light source (13, 43) to render information based on image data captured by the camera (29, 39).

13. The apparatus according to one of the preceding claims, further comprising one or more solar cells (24) attached to the peak (22) and/or to the mounting element (21), wherein the one or more solar cells (24) are configured to provide electric energy to the at least one light source, to the processing unit, and/or to a rechargeable battery.

14. The apparatus according to one of the preceding claims, further comprising one or more of at least one fixture (27, 37, 47) adapted to hold a battery, wherein the fixture is preferably attached to the peak (32, 42) and/or to a portion of the mounting element (21, 31, 41) adjoining the peak (32, 42); at least one ear phone (33); and/or at least one loudspeaker.

15. A method for operating an apparatus according to one of the preceding claims, comprising the steps of:
capturing data detected by the at least one sensor (14, 34);
processing the captured data by the processing unit (36); and
controlling the at least one light source (13, 43) based on the processed captured data.
